(19) Europäisches Patentamt
European Patent Office
Office européen des brevets

(11) Publication number: 0 363 208 A2

(12) EUROPEAN PATENT APPLICATION

(21) Application number: 89310227.7

(51) Int. Cl.5: C08F 8/20 , C08L 23/22

(22) Date of filing: 05.10.89

(30) Priority: 06.10.88 US 254462

(43) Date of publication of application: 11.04.90 Bulletin 90/15

(84) Designated Contracting States: BE DE ES FR GB IT NL

(71) Applicant: EXXON CHEMICAL PATENTS INC.
200 Park Avenue
Florham Park New Jersey 07932(US)

(72) Inventor: Fusco, James Vincent
5 Northover Place
Red Bank New Jersey 07701(US)
Inventor: Gardner, Irwin Jerome
1420 Golf Street
Scotch Plains New Jersey 07076(US)
Inventor: Hous, Pierre
Medidoornlaan 30
B-3080 Steenokkerzeel(BE)

(74) Representative: Dew, Melvyn John et al
Exxon Chemical Limited Exxon Chemical
Technology Centre P.O. Box 1
Abingdon Oxfordshire, OX13 6BB(GB)

# (54) Improved halogenated butyl rubber.

(57) Butyl rubber having olefinic unsaturation of about 0.2 to about 2.5 mole percent halogenated to contain chlorine bound to the polymer of about 0.05 to about 0.39 weight percent or bromine of about 0.05 to about 0.49 weight percent. The new halogenated butyl rubber when cured with heat reactive phenolic resin cure system, typically including a metal oxide such as zinc oxide, has improved performance properties including tension set, hot elongation, resistance to scorch and improved stress-strain properties and flex fatigue resistance after aging. Such advantages are particularly evident when the halogenated polymer is used in compositions useful as curing elements such as those used in the manufacture of pneumatic tires.

EP 0 363 208 A2

# IMPROVED HALOGENATED BUTYL POLYMER

This invention relates to halogenated butyl rubber copolymers and, in particular to the use of such copolymer for the production of curing elements such as bladders used in the manufacture of pneumatic tires.

Butyl rubber and its halogenated derivatives containing chlorine or bromine are generally known in the art.

Representative patents for the preparation of butyl rubber are U.S. Patents 2,373,706; 2,384,975, and 2,418,912.

U.S. Patents disclosing brominated butyl rubber include 2,631,984 in which the brominated rubber contains at least 0.5 percent by weight of bromine (Example 6 discloses a polymer containing 0.57 wt.%); and 2,698,041 which discloses the production of tires and curing bladders containing at least 0.5 weight percent of bromine but preferred amounts in the range of 1.5 to 6.0 weight percent.

U.S. Patent 2,732,354 discloses and claims chlorinated butyl rubber containing from about 0.4 to 2.3 weight percent of chlorine. U.S. Patent 2,944,578 describes compositions comprising chlorinated butyl rubber in which the butyl rubber has been substitutively chlorinated to contain at least 0.5 weight percent chlorine; Figure II. of this patent appears to include a data point at about 0.6 wt.% chlorine. U.S. Patent 3,099,644 details a process for the continuous halogenation of butyl rubber to produce a halogenated rubber containing 1.13 weight percent chlorine. U.S. Patent 2,943,664 discloses adhesive compositions for tire cords comprising chlorinated butyl rubber containing at least 0.5 percent by weight of combined chlorine. U.S. Patent 2,964,489 discloses a process for the production of tubeless tires and curing bladders containing 0.5 weight percent chlorine. The chlorine content of prior art chlorinated butyl rubber is typically defined by a formula, as shown for example in U.S. 2,964,489 (column 2, lines 50-60) and expressed as being "at least 0.5 wt. percent (preferably at least about 1.0 wt. percent) combined chlorine." In a restatement of the chlorine concentration, it is stated that there should be "at least about 0.2 and preferably at least about 0.5 weight percent of combined chlorine in the polymer." (id, lines 60-62). However, as noted before, no polymers were prepared in any prior art reference which contained the low levels of chlorine of the present invention and therefore the unique advantages of such polymers were never recognized (the lowest halogenation levels actually achieved in the prior art appear to be 0.57 weight percent bromine, U.S. Patent 2,631,984, Example 6, Table I, column 9; and about 0.61 weight percent chlorine, U.S. 2,944,578, Figure II. U.S. Patent 2,732,354 discloses and claims about 0.4-2.3 weight percent chlorine, but appears only to have synthesized polymers containing 1.10-1.95 weight percent chlorine).

In a patent disclosure directed to "Elastoplastic Compositions of Butyl Rubber and Polyolefin Resin" (U.S. 4,130,534), the authors define butyl rubber (at column 5, lines 17-34) to include "copolymers of isobutylene and isoprene containing 0.5 to 10, more preferably 1 to 4 percent by weight isoprene and said copolymers halogenated with from 0.1 to about 10, preferably 0.5 to 3.0 weight percent chlorine or bromine which chlorinated copolymer is commonly called chlorinated butyl rubber." Such a broad generic disclosure was incidental to the invention therein and, in fact, halogenated polymers outside the concentration range about 1.1 to 2.5 weight percent did not exist, were not prepared and were not used by those inventors. The polymers used in the cited reference were those available commercially as described in "Rubber World Blue Book," 1975 Edition, "Materials and Compounding Ingredients for Rubber," pp. 412-414, and a halogenated butyl polymer disclosed as "Bromobutyl rubber (X-2) 1.8 to 2.4 weight percent Bromine," in Table IV of said patent. The inventors herein discovered the unique properties of butyl rubber copolymers with low concentrations of halogen following synthesis and evaluation of such polymers.

Butyl rubber and its halogenated derivatives containing higher concentrations of chlorine and/or bromine are known in the art and are commercially successful products which are used in applications such as inner tubes, tire innerliners and sidewalls, tire curing elements, pharmaceuticals, and miscellaneous mechanical goods. When used as tire curing elements, the rubber component of the composition is subjected to severe conditions of environmental and physical stress. A tire curing bag is illustrated in U.S. Patent 2,964,489 and its use described. The curing bag has the general configuration of an inner tube. It is of an annular toroidal form having an external shape corresponding approximately to the interior contour of the pneumatic tire casing or inner liner to be cured thereon. It is equipped with a connecting valve by means of which a heated fluid under pressure, such as hot water and/or steam is introduced into its interior cavity during vulcanization of the tire. The tire curing bag is thereby expanded, causing the tire to conform closely to the surfaces of the mold cavity in which the tire is vulcanized. A tire curing bag generally has a wall thickness between about 0.25 to 2.5 inches. It can be appreciated that such a thick rubber element, subjected to high temperatures and caused to undergo extrusion is thereby subjected to significant deteriorating forces. A tire

curing diaphragm or bladder (for use in, e.g., a Bag-O-Matic® press) has the appearance of a hollow cylinder. In use, the top and bottom of the cylinder are sealed on the press by bead and clamping rings. The bladder is similarly subjected to high temperatures and stresses during the curing operation. These elements are required to be highly temperature resistant, able to undergo repeated flexing, be highly impermeable to hot fluids, be resistant to oxygen and ozone at high temperatures and be chemically resistant to the by products of vulcanization.

The advantage of using halogenated butyl, to provide a heat resistant member (e.g., curing bag, curing diaphragm or bladder) for pressing a tire outwardly against a mold during vulcanization is known (U.S. 2,698,041 and U.S. 2,964,489 incorporated herein by reference). However, even the use of compositions containing such polymers or the use of heat resistant "resin cured" butyl rubber ("Vulcanization and Vulcanizing Agents," W. Hofmann, The Garden City Press Ltd., 1967, p. 300 ff) results in compositions which degrade in such applications. Furthermore, it has been found that vulcanization of halogenated butyl rubber of the prior art (i.e., containing about 1.0 weight percent and more of chlorine or bromine) using a resin cure system can result in a composition subject to scorching (premature crosslinking) during processing, and high modulus and low elongation in the fabricated curing element, thereby making it subject to cracking and flex fatigue during use.

## SUMMARY OF THE INVENTION

A vulcanizable composition of matter comprising a butyl rubber copolymer of $C_4$ to $C_7$ issolefin (preferably isobutylene) and $C_4$ to $C_{14}$ conjugated multiolefin (preferably isoprene) wherein said copolymer has olefinic unsaturation of about 0.2 to about 2.5 mole percent which has been halogenated to contain about 0.05 to about 0.39 weight percent with chlorine or about 0.05 to about 0.49 weight percent bromine or mixtures thereof wherein said halogen is chemically bound to said copolymer. Where mixtures of halogen are employed the bromine content limits apply except that chlorine content should not exceed 0.39 weight percent. The new halogenated butyl rubber vulcanized with the aid of phenolic curing resins is particularly useful in the production of curing elements used in the manufacture of pneumatic tires. Compositions employing the improved polymer are thermally stable and remain flexible, providing exceptional utility under severe conditions.

## DETAILED DESCRIPTION OF THE INVENTION

Butyl rubber is a copolymer of an isoolefin and a conjugated multiolefin. The copolymers useful in this invention comprise a major portion of isoolefin and a minor amount of a conjugated multiolefin. The preferred copolymers comprise about 97.5 to about 99.8 weight percent, more preferably about 98.6 to about 99.4 weight percent of a $C_4$-$C_7$ isoolefin, such as isobutylene, and about 2.5 to about 0.2 weight percent, preferably about 1.4 to about 0.6 weight percent of a multiolefin of about 4-14 carbon atoms. Copolymers of these monomers are referred to in the patents and literature as "butyl rubber"; see, for example, the textbook Synthetic Rubber by G. S. Whitby (1954 edition by John Wiley & Sons, Inc.), pages 838-891, and "Isobutylene Polymers", Encyclopedia of Polymer Science and Engineering (Vol. 8, 2nd Ed., 1987, John Wiley & Sons, Inc.) pages 423-448, the latter incorporated herein by reference. The preferred isoolefin is isobutylene. Suitable conjugated multiolefins include isoprene, butadiene, dimethyl butadiene, piperylene, etc., preferably, isoprene.

Commercial butyl rubber is a copolymer of isobutylene and minor amounts of isoprene. It is generally prepared in a slurry process using methyl chloride as a diluent and a Friedel-Crafts catalyst, typically $AlCl_3$, as the polymerization initiator. The methyl chloride offers the advantage that $AlCl_3$, a relatively inexpensive Friedel-Crafts catalyst, is soluble in it, as are the isobutylene and isoprene comonomers. Additionally, the butyl rubber polymer is insoluble in the methyl chloride and precipitates out of solution as fine particles to form a slurry. The polymerization is generally carried out at temperatures of about -90 °C to -100 °C. See U.S. Patent Nos. 2,356,128 and 2,356,129 incorporated herein by reference.

The butyl polymerization process is carried out continuously in a draft tube reactor. Monomer feed and catalyst are continuously introduced at bottom of the draft tube where an axial flow pump is located. The pump circulates the slurry at high velocity to provide efficient mixing and heat transfer. Polymer slurry containing about 20-30 weight percent butyl rubber continuously overflows from the reactor through a

transfer line.

Where the desired product is the butyl rubber itself, the slurry is fed through the transfer line to a flash drum operated at about 140-180kPa (1.38-1.58 atm) and 65-75° C. Steam and hot water are mixed with the slurry in a nozzle as it enters the drum to vaporize methyl chloride and unreacted monomers which pass overhead and are recovered, and the polymer is finished by water removal and drying.

Conventional high molecular weight butyl rubber generally has a number average molecular weight of about 25,000 to about 500,000, preferably about 80,000 to about 300,000, especially about 100,000 to about 250,000. Low molecular weight polymers have also been prepared with number average molecular weights of from 5,000 to 25,000.

Where it is desired to produce a halogenated butyl rubber, this is accomplished commercially by preparing a solution of butyl rubber which is subsequently halogenated.

In the preferred method of solution halogenation a "solvent replacement" process is utilized. Cold butyl rubber slurry in methyl chloride from the polymerization reactor is passed to an agitated solution in a drum containing liquid hexane. Hot hexane vapors are introduced to flash overhead the methyl chloride diluent and unreacted monomers. Dissolution of the fine slurry particles occurs rapidly. The resulting solution is stripped to remove traces of methyl chloride and monomers, and brought to the desired concentration for halogenation by flash concentration. Hexane recovered from the flash concentration step is condensed and returned to the solution drum. The butyl rubber in solution is contacted with chlorine or bromine in a series of high-intensity mixing stages. Elemental halogen is present up to a maximum of about 1:1 molar ratio with enchained isoprene in the butyl feedstock. Hydrogen chloride or hydrogen bromide is generated during the halogenation step and must be neutralized in a subsequent step. The halogenated polymer in solution is contacted with steam and water in multiple vessels in order to vaporize the solvent and produce a slurry of halogenated butyl in water. The stripped slurry is finished using extrusion drying techniques well known in the art. Extrusion temperature must be kept low to prevent dehydrohalogenation and this is preferably achieved using gas injection into the drying extruder, as described in detail in U.S. 4,508,592, incorporated herein by reference. For a detailed description of the halogenation process see U.S. Patent Nos. 3,023,191; 2,940,960 and 3,099,644 as well as Encyclopedia of Polymer Science and Engineering, Vol. 8, Second Ed. 1987 (John Wiley & Sons) pp 435-436, which describes a continuous chlorination process, all of which are incorporated herein by reference.

Most recently, a process has been described for preparing halogenated butyl rubber in the melt phase using, e.g., an extrusion process. Details of the chlorination and/or bromination of butyl rubber by means of such a process is described in detail in U.S. 4,513,116; 4,548,995; and 4,554,326 incorporated herein by reference. In a preferred embodiment of such a process, butyl rubber is fed to an extruder at a controlled rate such that the reaction zone is not completely filled with rubber. A halogenation agent is fed to the temperature controlled reaction zone, preferably less than about 170° C and an inert gas is injected at a point downstream of the reaction to sweep by-products and unreacted halogenating agent out of a vent. The halogenated product is stabilized, extruded from the extruder and cooled.

Although brominated and chlorinated butyl rubber are described in the art and have been known commercially for many years, embodiments of these products containing very low levels of halogen, such as described and claimed herein, have been unknown. Indeed, the incorporation of such low concentrations of halogen would appear to be contrary to the achievement of a useful, crosslinked elastomer. However, as is taught herein, halogenated butyl comprising bromine, chlorine and mixtures thereof, at a concentration of about 0.05 to about 0.39 weight percent chlorine or about 0.05 to about 0.49 weight percent bromine; preferably about 0.1 to about 0.35 weight percent chlorine or about 0.1 to about 0.45 weight percent bromine or mixtures thereof results in a useful and surprisingly effective product, particularly in its ability to withstand severe high temperature use (as in curing elements). A somewhat higher weight percent concentration of bromine can be tolerated in view of its higher atomic weight compared to chlorine. Where mixtures of halogen are employed the bromine content limits apply except that chlorine content should not exceed 0.39 weight percent. Useful products of the present invention are obtained when the unsaturation of the butyl rubber prior to halogenation is about 0.2 to about 2.5 mole percent, preferably about 0.6 to about 1.4 mole percent.

The low concentrations of halogen present in the halogenated butyl can be achieved by alternative means. In one embodiment, butyl rubber containing a low concentration of double bonds, e.g., by means of enchained isoprene, is halogenated in a 1:1 molar ratio, thereby incorporating approximately one halogen atom for each double bond originally present in the butyl rubber. Alternatively, butyl rubber comprising a concentration of such double bonds greater than is required based on the preferred concentration of halogen, is only partially halogenated, thereby retaining unhalogenated double bond moieties. Where partially halogenated butyl rubber is used the concentration of unhalogenated double bonds is generally

from about 0.12 to about 1.88 mole %; preferably about 0.12 to about 0.75 mole %.

As described above, tire curing elements are used in combination with equipment that is used to shape and cure tires, both new tires and retreaded tires. These include curing bags, diaphragms and bladders. Such elements must withstand high heat, exposure to steam, hot water and hot air, and extreme flexing during the tire curing operation. Good resistance to tearing at high temperatures is also an important property. Butyl rubber (e.g., isobutylene-isoprene copolymer) cured with polymethylol phenol resin (resin cure) has been used commercially in order to achieve the desired combination of properties. The unique requirements of the resin cure (discussed below) typically require the inclusion of a halogen donor in the composition when butyl is used. In contrast, the use of halogenated butyl, brominated or chlorinated does not require such a secondary agent.

The resin cure as used in the vulcanization of elastomers containing unsaturation, and in particular for butyl rubber is described in detail in "Rubber Technology" Third Edition, Maurice Morton, ed., 1987, pages 13-14, 23; incorporated herein by reference as well as in the patent literature, see, e.g., U.S. 3,287,440 and 4,059,651 also incorporated herein by reference.

Heat reactive, crosslinking resins useful in the present invention are phenol-formaldehyde resins in which are incorporated phenolmethylol groups, these products are known commercially and also include halogenated versions thereof. The generalized structure of the resin has been suggested as:

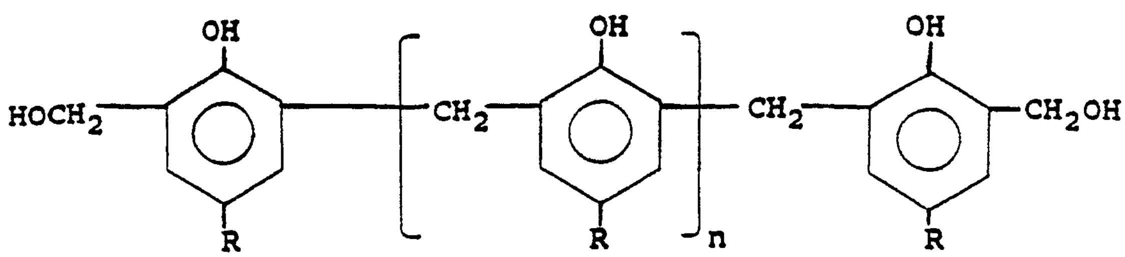

wherein R is an alkyl, aryl or alkenyl hydrocarbon containing 4 to 16 carbon atoms and n is about 0 to about 50; typically, the methylol groups are present at about 6 to about 12 weight percent. When used for curing butyl rubber, a halogen activator is ordinarily used to effect the formation of crosslinks. Such activators include stannous chloride or halogen-containing polymers such as polychloroprene. The cure system additionally includes a metal oxide such as zinc oxide.

Halogenated resins in which some of the hydroxyl groups of the methylol group are replaced with, e.g., bromine, are more reactive. With such resins the use of additional halogen activator is not required.

The term "halogenated (phenol aldehyde) resin" as used in the description of the present invention is intended to mean both monomeric and polymeric halomethyl hydrocarbon-substituted phenols. The monomeric form of these curing agents falls under the general formula:

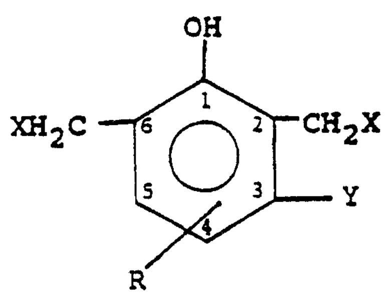

wherein R is an alkyl, aryl or alkenyl hydrocarbon containing 4 to 16 carbon atoms located in the meta or para positions (4-5 positions), X is a halogen such as fluorine, chlorine, bromine or iodine, and Y is hydrogen or hydroxy.

Products obtained by the controlled halogenation of methylol-containing resins prepared by the condensation of an aldehyde, e.g. formaldehyde, with the following representative phenols: 4-tertiary-butyl phenol, 4-phenyl phenol and 4-monoxy phenol, are within the purview of the halogenated phenol aldehyde resins suitable for use in this invention. These halomethyl hydrocarbons substituted phenol compounds and their preparation are fully described in U.S. Pat. Nos. 3,093,613 and 3,165,496 which are incorporated herein by reference.

Preferably, the halogenated phenol aldehyde resin is a bromomethyl alkylated phenol aldehyde resin having a methylol content of about 9-14% and a bromine content of about 3-9%. Illustrative of the halogenated phenol aldehyde resins are those prepared by Schenectady Chemicals, Inc. and identified as resins SP 1055® and SP 1056®. Such resins are heat reactive bromomethyl alkylated phenolic resins with a melting point of about 125° F. The SP 1055 resin has a methylol content of about 9 to about 12.5% and a bromine content of about 4%. whereas the SP 1056 resin has a methylol content of about 7.5 to about 11% and a bromine content of about 6%. Commercial forms of the nonhalogenated resins are available such as SP-1044® with a methylol content of about 7 to about 9.5% and SP-1045® with a methylol content of about 8 to about 11%.

The resin cure useful in the present invention typically includes zinc oxide as part of the curative package, generally at a concentration of about 3 to about 8 parts by weight per hundred of rubber (phr), preferably about 4 to about 6 phr, for example 5 phr. The curing resin itself is typically present at about 3 to about 15 phr, preferably about 5 to about 13 phr, most preferably about 7 to about 11 phr, for example at about 10 phr. Optional ingredients useful in the present invention include those well known to those skilled in the art of rubber compounding such as carbon black (for increased strength and overall performance), mineral fillers, rubber extenders such as oils (for increased flexibility), including hydrocarbon oils and castor oil as well as other stabilizers and additives to improve processing and aging or end-use performance. For an application such as the curing elements, a useful starting point formulation based on 100 parts by weight of rubber includes HAF grade carbon black - 50phr, castor oil - 5 phr, zinc oxide - 5 phr and halogenated curing resin (e.g., Schenectady SP-1045®) - 10 phr; for comparative purposes in which unhalogenated butyl rubber is employed, the composition would additionally contain a halogen activator such as polychloroprene (e. g., Neoprene W) - 5 phr.

Suitable compositions can be prepared by using conventional mixing techniques including, e.g., kneading, roller milling, extruder mixing, internal mixing (such as with a Banbury® mixer) etc. The sequence of mixing and temperatures employed are well known to the skilled rubber compounder, the objective being the dispersion of fillers, activators and curatives in the polymer matrix without excessive heat buildup. A useful mixing procedure utilizes a Banbury mixer in which the halogenated butyl, carbon black and castor oil are added and the composition mixed for the desired time or to a particular temperature to achieve adequate dispersion of the ingredients. Alternatively, the rubber and a portion of the carbon black (e.g., one-third to two-thirds) is mixed for a short time (e.g., about 1 to 3 minutes) followed by the remainder of the carbon black and oil. Mixing is continued for about 5 to 10 minutes at high rotor speed during which time the mixed compound reaches a temperature of about 140° C. Following cooling, the compound is mixed in a second step on a rubber mill during which the zinc oxide and curing resin are thoroughly and uniformly dispersed at relatively low temperature, e.g., about 80 to about 105° C. Variations in mixing will be readily apparent to those skilled in the art and the present invention is not limited by the mixing procedure. In each case it is the objective of such mixing to thoroughly and uniformly disperse all components of the composition.

Vulcanization of a molded article, for example a curing element, is carried out in heated presses under conditions well known to those skilled in the art. It is preferred that vulcanization is effected at temperatures of about 140 to about 185° C and for periods of about 10 to about 60 minutes. Curing time will be affected by the thickness of the article and the concentration and type of curing resin as well as halogen and unsaturation content of the halogenated rubber. However, the vulcanization parameters can readily be established with a few experiments utilizing e.g., a laboratory characterization device well known in the art, the Monsanto Oscillating Disc Cure Rheometer (described in detail in American Society for Testing and Materials, Standard ASTM D 2084.

In the prior art, use of unhalogenated butyl rubber in combination with a halogen donor such as polychloroprene, was subject to failures due to nonuniform dispersion of the halogen-containing activator polymer which resulted in nonhomogeneous or over-vulcanization of the butyl and/or polychloroprene phases. It has been surprisingly found that the use of halogenated butyl containing the very low levels of halogen of the present invention is effectively and uniformly vulcanized with the resin cure system and results in a composition particularly suited for use as a curing element.

The following examples are given as specific illustrations of the claimed invention. It should be understood, however, that the invention is not limited to the specific details set forth in the examples. All parts and percentages in the examples and the remainder of the specification are by weight unless otherwise specified.

EXAMPLES

Comparative Example 1

As disclosed in the specification hereinabove, a resin cured butyl composition is typically used in tire curing elements, e.g., tire curing bladders. Such compositions include a halogen containing ingredient such as polychloroprene or stannous chloride. For comparative purposes a resin cured composition was prepared using halogenated butyl rubber containing a higher concentration of chlorine, i.e., outside the scope of the claims (about 1.1 to about 1.3 weight percent chlorine).

The compositions were prepared using a laboratory Banbury mixer; for the composition containing polychloroprene and butyl rubber the polymers were preblended on a rubber mill to improve dispersion. Banbury mixing was conducted as follows: carbon black, zinc oxide (composition 1 only) and oil were added to the Banbury followed by the polymer(s) ; mixing was continued until a temperature of 132-138° C was reached. The curing resin was added to the mixed composition on a rubber mill; for the halogenated butyl, zinc oxide was added with the curing resin to avoid vulcanization of the halogenated butyl during Banbury mixing. Stress-strain samples were cured at for 60 minutes at 166° C. Results are shown in Table A. (The change in oil type for composition 2 was made in an effort to improve compatibility and performance. The concentration of curing resin was reduced in view of the high reactivity of the resin cure in the presence of the higher halogen content halogenated butyl.) The data illustrate that high halogen content halogenated butyl of the prior art is cured to high levels of modulus and corresponding low elongation. The aged properties also indicate that such a composition is less conducive to use in the severe conditions encountered in applications such as tire curing elements.

Table A

| Component | Composition (phr) | |
|---|---|---|
| | 1 | 2 |
| Butyl rubber[(a)] | 100 | |
| High chlorine chlorinated butyl[(b)] | | 100 |
| Polychloroprene (Neoprene GN) | 5 | |
| Carbon black (HAF) | 50 | 50 |
| Oil[(c)] | 5 | 5 |
| Zinc oxide | 5 | 5 |
| Curing resin[(d)] | 10 | 5 |
| Stress-Strain Properties Original/Aged[(e)] | | |
| Hardness, Shore A | 65/89 | 65/74 |
| 300% Modulus, MPa | 4.34/7.24 | --/-- |
| Tensile Strength, MPa | 12.9/7.2 | 11.8/4.5 |
| Elongation, % | 740/310 | 200/130 |
| Tensile Product[(f)] | 9,546/2,232 | 2,360/585 |

(a) Exxon Butyl 218 (Exxon Chemical Company), Mooney viscosity (ML 1 + 3) at 127° C = 50-60, unsaturation about 1.6 mole %.
(b) Exxon Chlorobutyl 1066 (Exxon Chemical Company), Mooney viscosity (ML 1 + 8) at 100° C = 49-59, chlorine = 1.1 - 1.3 weight %.
(c) Castor oil in composition 1, paraffinic rubber process oil (Flexon 840®, Exxon Chemical Company) in composition 2.
(d) Amberol ST-137® (curable phenolic resin, 8% methylol content, Rohm & Haas Co.).
(e) Air aged, 48 hours at 177° C.
(f) Tensile strength x elongation.

Example 1

Twenty five pounds of butyl rubber (isobutylene-isoprene copolymer) having about 0.8 to 1.0 mole % unsaturation was dissolved in 30 gallons of saturated mixed hexanes in a stirred reaction vessel. The polymer solution was chlorinated with gaseous chlorine at 30 °C. Byproduct HCl in the chlorinated butyl solution was neutralized with NaOH and water washed to remove inorganic byproducts. The polymer was recovered by stripping off the solvent using hot water (125 gallons) to which 2.5 lb. of a 10 wt% slurry of calcium stearate in water was added (the slurry was stabilized with 25 g. of a commercial non-ionic surfactant, ethoxylated tridecylalcohol, FloMo AJ-85®, Seller Chemical Corporation). In addition, 0.025 lb. of 2,6-ditertiary butyl paracresol dissolved in hexane as a 1 wt% solution was added to the halogenated polymer solution prior to stripping. The agitated polymer/hot water system was maintained at a temperature of about 80 °C in order to flash off and recover the solvent. The halogenated polymer was recovered and dried by working it on a conventional rubber mill for 5 minutes at a roll temperature of 130 °C. Analysis of the halogenated polymer showed the following:

| | |
|---|---|
| chlorine, wt% | 0.28 |
| calcium stearate, wt% | 0.98 |
| water content, wt% | 0.04 |
| Mooney viscosity at 125 °C (ML, 1 min. preheat, 8 min. value) | 40.8 |

In order to demonstrate the improved performance of the low halogen content halogenated butyl of this invention, tests were conducted using a tire curing bladder formulation and commercial polymer blends typically used for that purpose.

Table I

| Component[(a)] | Composition | | | |
|---|---|---|---|---|
| | A | B | C | D |
| Low chlorine butyl | 100 | | | |
| Butyl rubber, 1.6 mole % unsat. | | 100 | | 80 |
| Butyl rubber, 0.9 mole % unsat. | | | 100 | |
| Chlorinated butyl, 1.3 wt% Cl | | | | 20 |
| Polychloroprene | | 5 | 5 | |

a) Polymer B, commercial butyl rubber, Exxon Butyl 268 (Exxon Chemical Company)
Polymer C, commercial butyl rubber, Exxon Butyl 077 (Exxon Chemical Company)
Polymer D, commercial halogenated butyl rubber, Exxon Chlorobutyl 1066 (Exxon Chemical Company)
Polychloroprene, Neoprene WRT (DuPont)

All compositions additionally contained (phr): HAF 330 carbon black - 50, Castor oil - 5, Zinc oxide - 5, SP-1044 curing resin - 10.

In compositions B and C, the Neoprene WRT (polychloroprene) served as the halogen donor for the resin cure, whereas in composition D, the commercial chlorinated butyl served that purpose. Composition A did not require a separate halogen donor as discussed previously.

The compositions were mixed in a laboratory Banbury (1.25 liters capacity) as follows: polymer added initially, 2/3 carbon black added at 30 seconds, remainder of carbon black, oil and zinc oxide (except for A and D) added at 1 minute 30 seconds; mixing continued for about 6 to 7 minutes (temperature approximately 160 °C) for compounds B, C, and D; mixing continued for about 5 to 6 minutes (temperature less than about 140 °C) for compound A. It is preferable to avoid temperatures of greater than about 140 °C when mixing the all-halogenated butyl composition in order to avoid degradation. Each of the compositions was then individually milled on a rubber mill at less than about 65 °C in order to disperse the curing resin (and zinc oxide in the case of compound A).

Test results are summarized in Table II. The composition based on the low halogen content halogenated butyl had several advantages compared to the higher unsaturation non-halogenated butyl with polychloroprene activation typically used in this application (B): better elongation and aging characteristics than a blend of non-halogenated and fully-halogenated butyl (D) better tension set before and after aging than the polychloroprene activated cure of unhalogenated butyl with a level of diene functionality equivalent to the low halogen-containing polymer prior to halogenation (C); and better scorch resistance, hot elongation and air aging (Shore A hardness, modulus, elongation, and tensile product).

Table II

| | A | B | C | D |
|---|---|---|---|---|
| **MOONEY VISCOSITY** | | | | |
| (1 + 8) 100°C | 74.5 | 78.5 | 75.5 | 75 |
| **MOONEY SCORCH 135°C** | | | | |
| $T_3$ min | >84 | 57 | >110 | 75 |
| $T_{10}$ min | | 75 | | 101 |
| **MONSANTO RHEOMETER** | | | | |
| 5° arc, 195°C | | | | |
| ML, lb-in | 13 | 16 | 15 | 15.5 |
| MH60, lb-in | 44 | 55 | 39 | 57 |
| MH60 - ML, lb-in | 31 | 39 | 24 | 41.5 |
| ts2, min | 2 | 2.25 | 3.75 | 2 |
| t90, min | 21.5 | 14.5 | 22.5 | 16.5 |
| **TENSION SET, %** | | | | |
| Unaged | 8 | 8 | 10 | 8 |
| Air aged, 24 HR | 16 | 14 | 32 | 18 |
| Air aged, 48 HR | 48 | 20 | 49 | Broken |
| Steam, 24 HR | 8 | 8 | 14 | 8 |
| Steam, 48 HR | 8 | 8 | 18 | 8 |
| **ELONGATION TEST** | | | | |
| % Elong. at 25°C | 680 | 770 | >770 | 595 |
| % Elong. at 190°C | 625 | 535 | >770 | 305 |
| % Tension set for rings elongated at 190°C | 4 | 2.6 | 13.2 | 2.6 |
| **STRESS-STRAIN PROPERTIES** | | | | |
| (30 min cure at 195°C) | | | | |
| Shore A hardness, unaged | 52 | 54 | 52 | 58 |
| Air aged, 24 HR | 62 | 71 | 61 | 71 |
| Air aged, 48 HR | 63 | 71 | 82 | 74 |
| Steam, 24 HR | 53 | 55 | 54 | 58 |
| Steam, 48 HR | 54 | 56 | 57 | 58 |
| 100% Mod MPa, unaged | 1.46 | 1.77 | 1.72 | 2.29 |
| Air aged, 24 HR | 2.14 | 2.94 | 3.06 | 3.15 |
| Air aged, 48 HR | 2.17 | 2.92 | 2.88 | 2.94 |
| Steam, 24 HR | 2.06 | 2.16 | 2.34 | 2.82 |
| Steam, 48 HR | 1.84 | 2.24 | 2.37 | 2.56 |
| 300% Mod MPa, unaged | 5.93 | 5.71 | 3.98 | 8.61 |
| Air aged, 24 HR | 5.76 | 7.73 | 5.99 | 8.8 |
| Air aged, 48 HR | 4.85 | 6.6 | 4.97 | 6.82 |
| Steam, 24 HR | 7.78 | 6.72 | 5.47 | 10.1 |
| Steam, 48 HR | 7.04 | 7.21 | 5.51 | 8.96 |
| Tensile Str., MPa | | | | |
| Unaged | 16.1 | 14.5 | 14.8 | 15.6 |
| Air aged, 24 HR | 8.9 | 10.9 | 10.0 | 10.8 |
| Air aged, 48 HR | 7.2 | 7.7 | 6.7 | 7.4 |
| Steam, 24 HR | 16.7 | 15.6 | 15.3 | 15.2 |
| Steam, 48 HR | 15.1 | 15.1 | 15.6 | 16.8 |

Table II (Cont'd)

| | A | B | C | D |
|---|---|---|---|---|
| Elognation % | | | | |
| Unaged | 631 | 628 | 754 | 543 |
| Air aged, 24 HR | 488 | 430 | 516 | 433 |
| Air aged, 48 HR | 476 | 364 | 440 | 342 |
| Steam, 24 HR | 585 | 635 | 693 | 460 |
| Steam, 48 HR | 560 | 596 | 698 | 588 |
| Tensile Product | | | | |
| Unaged | 10,159 | 9,106 | 11,159 | 8,470 |
| Air aged, 24 HR | 4,343 | 4,687 | 5,144 | 4,676 |
| Air aged, 48 HR | 3,427 | 2,803 | 2,952 | 2,521 |
| Steam, 24 HR | 9,770 | 9,906 | 10,603 | 6,992 |
| Steam, 48 HR | 8,456 | 9,000 | 10,889 | 9,878 |

NOTES:

1. Air aging at 180°C. Steam aging at 170°C.
2. Tension set: Standard dumbbell, marks 2.5 cm apart; sample extended 300% for 10 minutes relaxed for 10 minutes prior to being measured.
3. Elongation test: ASTM D 412, Part 4.4 O-Ring specimens. O-Rings elongated until break, relaxed at 25°C, set measured.
4. Tensile product = tensile strength x elongation.

Example 2

A low chlorine content butyl rubber was prepared in a large capacity polymerization/halogenation process as follows:

The butyl rubber used for halogenation was polymerized in a slurry process with aluminum chloride at -95°C in methyl chloride diluent. The feed blend to the polymerization reactor consisted of 1.25 lbs. of isoprene per 100 lbs. of isobutylene plus recycled methyl chloride diluent. Catalyst solution was produced by passing pure methyl chloride through packed beds of granular aluminum chloride at 30-45°C and the concentrated solution formed was diluted with additional methyl chloride to provide a catalyst concentration of 0.15 wt.% on monomers. The feed blend and catalyst solution were chilled in a series of heat exchangers before entry to the reactor. The cold feed and catalyst are introduced continuously to a reactor comprised of a central vertical draft tube surrounded by concentric rows of cooling tubes. The reactor is mixed by an axial flow pump located at the bottom of the draft tube which circulates slurry through the cooling tubes. The polymer precipitates as a milky slurry as it forms. The polymerization is exothermic, generating approximately 0.82 MJ/kg (350 Btu/lb) of polymer. This heat is removed by exchange to boiling ethylene supplied as liquid to jackets which enclose the cooling tubes. Butyl slurry at 25-35 wt.% rubber solids continuously overflows from the reactor through a transfer line to an agitated flash drum operating at 55-70°C and 140-160 kPa (20-23 psi). The catalyst is deactivated by injection of triethylene glycol into the transfer line.

The butyl rubber used for chlorination had an unsaturation of 0.9 mole % and a Mooney viscosity (ML 1+8 at 125°C) = 50-60. The cold slurry of butyl in methyl chloride flowed from the reactor into a drum containing hot liquid hexane which rapidly dissolved the fine slurry particles. Hexane vapor is added to flash methyl chloride and unreacted monomers overhead for recovery and recycle. The solution of butyl in hexane passed to a stripping column where the final traces of methyl chloride and monomers were removed. The hot solution was brought to the desired concentration for halogenation, typically 20-25 wt.% in an adiabatic flash step. In the halogenation process, halogenation was carried out in the hydrocarbon solution using elemental chlorine in a 1:18 molar ratio with enchained isoprene in the butyl. The solution of butyl rubber was treated with chlorine in highly agitated reaction vessels at 40-65°C. For reasons of safety, chlorine is introduced as a vapor or in dilute solution. Liquid chlorine reacts violently with butyl rubber solutions. The hydrogen chloride generated was neutralized with dilute aqueous caustic in high intensity

mixers. The caustic phase is removed by settling. Antioxidants and stabilizers, e.g., calcium stearate and butylated hydroxy toluene are added to facilitate processing, and to protect against the effects of dehydrohalogenation and oxidation. The solution was sent to a multivessel solvent-removal system where steam and water vaporize the solvent and produce a slurry of halobutyl particles in water. The stripped slurry was sent to a finishing unit where it was dewatered and dried by extrusion. The chlorinated polymer showed the following characteristics:

Chlorine, wt.% = 0.28
Mooney viscosity at 125 °C = 58.0
(ML, 1 min. preheat,
8 min. value)

The chlorinated polymer was compared to a control composition (similar to composition B of Example 1) as follows:

Table III

| Component[(a)] | Composition | |
|---|---|---|
| | E | F |
| Butyl rubber | 100 | |
| Low chlorine butyl | | 100 |
| Polychloroprene | 5 | |

(a) Butyl rubber, commercial grade Exxon Butyl 268, 1.6 mole% unsaturation.
Polychloroprene, commercial grade Neoprene W.
Each composition contained (phr): HAF 330 carbon black - 55, Castor oil - 5, zinc oxide - 5, SP-1045 curing resin - 10.

The compositions were mixed in a laboratory Banbury mixer as follows: at zero time polymer was added; at 1.5 minutes all carbon black, oil and zinc oxide was added and the mix was allowed to continue until a temperature of 155-160 °C was reached (approximately 4.5 min.), at which time the composition was dumped and sheeted on a rubber mill. Curing resin was dispersed in the composition on a warm rubber mill to faciliate melting and dispersion of the resin (approximately 90-100 °C). Test results are summarized in Table IV.

Table IV

| | Compositions | |
|---|---|---|
| | E | F |
| Mooney Viscosity (1 + 4) 100 °C | 81 | 87 |
| Curing Rheometer[(a)] | | |
| ML | 13.4 | 14.1 |
| MH | 44.4 | 39.0 |
| Ts2 | 4.0 | 2.6 |
| Tc90 | 39.3 | 38.8 |
| Stress-Strain Properties, Unaged/Aged[(b)] | | |
| Shore A | 69/90 | 65/80 |
| Tensile Str., MPa | 13.9/11.6 | 14.9/11.1 |
| 300% Mod., MPa | 6.1/10.2 | 5.7/7.1 |
| Elongation, % | 670/350 | 640/510 |
| Tension Set at 300% | 5.5/21.9 | 6.2/18.8 |
| Fatigue to Failure, Aged[(c)] | | |
| Average kilocycles | 17.9 | 114.9 |

(a) Oscillating disc (ASTM D-2084) at 190 °C, 3 ° arc.
(b) Samples cured 45 minutes at 190 °C, aged 24 hours at 177 °C, tested at room temperature.
(c) Monsanto fatigue-to-failure test: 140% extension, 100 cycle/min., dumbell samples aged 24 hours at 177 °C.

The data show outstanding performance for the low halogen content butyl composition cured with the resin cure system. This is particularly evident in the fatigue-to-failure (flex) data based on aged samples in which performance is improved by more than 600%.

Example 3

A low halogen content halogenated butyl rubber was prepared by means similar to that of Example 1 except that the halogen employed was bromine and the resulting halogenated polymer was additionally stabilized with epoxidized soybean oil. Analysis of the polymer showed that it contained 0.32 wt.% bromine and had a Mooney viscosity (1 min. preheat, 8 min. value) at 125 °C of 40.8. Compositions containing the polymer were mixed as in Example 1; the curing resin used was SP 1045. For reference purposes a blend of Exxon Butyl 268 (90 phr) and Exxon Chlorobutyl 1066 (10 phr) was used. Results as summarized in Table V.

Table V

| Component (a) | Composition G | Composition H |
|---|---|---|
| Butyl rubber (Exxon Butyl 268) | 90 | |
| Chlorinated Butyl Rubber (Exxon Chlorobutyl 1066) | 10 | |
| Low Bromine Butyl | | 100 |
| Mooney Viscosity (1+8 at 100°C) | 77 | 74 |
| Mooney Scorch (135°C), min. | | |
| T3 | >110 | >110 |
| T10 | | |
| Mooney Rheometer (5° arc at 195°C) | | |
| ML (lb-in) | 14 | 14 |
| MH60 (lb-in) | 45 | 32 |
| MH-ML (lb-in) | 31 | 18 |
| ts2 (min) | 1.75 | 2.50 |
| t90 (min) | 19.00 | 30.00 |
| Stress-Strain (30 min cure at 195°C)(b) | | |
| Hardness (Shore A) | | |
| Unaged | 52 | 49 |
| Air Aged (24 hours) | 63 | 54 |
| Air Aged (48 hours) | 66 | 56 |
| Steam Aged (24 hours) | 60 | 54 |
| Steam Aged (48 hours) | 62 | 54 |

Table V (Cont'd)

| Component (a) | Composition G | Composition H |
|---|---|---|
| **Stress-Strain** (Continued) | | |
| 100% MOD (MPa) | | |
| Unaged | 1.69 | 1.39 |
| Air Aged (24 hours) | 2.55 | 1.76 |
| Air Aged (48 hours) | 2.34 | 1.65 |
| Steam Aged (24 hours) | 2.45 | 1.74 |
| Steam Aged (48 hours) | 2.43 | 1.60 |
| 300% MOD (MPa) | | |
| Unaged | 6.80 | 4.50 |
| Air Aged (24 hours) | 6.05 | 4.17 |
| Air Aged (48 hours) | 4.65 | 2.86 |
| Steam Aged (24 hours) | 8.04 | 6.12 |
| Steam Aged (48 hours) | 8.00 | 5.70 |
| Tensile Str. (MPa) | | |
| Unaged | 15.20 | 15.20 |
| Air Aged (24 hours) | 9.92 | 10.33 |
| Air Aged (48 hours) | 6.33 | 4.62 |
| Steam Aged (24 hours) | 15.50 | 15.40 |
| Steam Aged (48 hours) | 15.30 | 14.30 |
| Elongation % | | |
| Unaged | 617 | 758 |
| Air Aged (24 hours) | 536 | 702 |
| Air Aged (48 hours) | 471 | 528 |
| Steam Aged (24 hours) | 537 | 654 |
| Steam Aged (48 hours) | 539 | 610 |
| **Tension Set** (c) | | |
| Unaged | 10 | 8 |
| Air Aged (24 hours) | 18 | 18 |
| Air Aged (48 hours) | 30 | 30 |
| Steam Aged (24 hours) | 8 | 6 |
| Steam Aged (48 hours) | 10 | 10 |
| **Elongation Test** (c) | | |
| % Elongation at 23°C | 775 | >880 |
| % Elongation at 190°C | 556 | >880 |
| Tension Set | 4.00 | 2.60 |
| **Tensile Product** | | |
| Unaged | 9,378 | 11,522 |
| Air Aged (24 hours) | 5,317 | 7,252 |
| Air Aged (48 hours) | 2,981 | 2,439 |
| Steam Aged (24 hours) | 8,324 | 10,072 |
| Steam Aged (48 hours) | 8,247 | 8,723 |

(a) Additional components (phr): HAF 330 carbon black - 50, Castor oil - 5, zinc oxide - 5, SP 1045 curing resin - 10.
(b) Air and steam aging at 180°C.
(c) Test as described in Table II.

## Claims

1. A vulcanizable composition of matter comprising a copolymer of $C_4$ to $C_7$ isoolefin and $C_4$ to $C_{14}$ conjugated multiolefin wherein said copolymer has olefinic unsaturation of from 0.2 to 2.5 mole percent, has been halogenated to contain from 0.05 to 0.39 weight percent chlorine or from 0.05 to 0.49 weight percent bromine or mixtures thereof wherein said halogen is chemically bound to said copolymer.

2. Composition according to claim 1 in which said isoolefin is isobutylene and said multiolefin is isoprene.

3. Composition according to claim 1 or 2 in which said olefinic unsaturation is from 0.6 to 1.4 mole percent.

4. Composition according to claim 1, 2 or 3 in which said halogen is chlorine at a concentration of from 0.1 to 0.35 weight percent or bromine at a concentration of from 0.1 to 0.45 weight percent.

5. Composition according to any preceding claim when vulcanized by means of zinc oxide and a phenolic resin curing agent.

6. Curing element for pneumatic tires comprising the composition of claim 5.

7. The use of a vulcanizable composition according to any of claims 1 to 4 in the production of curing elements for pneumatic tires.